# EUROPEAN PATENT SPECIFICATION

(11) **EP 0 682 760 B1**
(45) Date of publication and mention of the grant of the patent: **11.02.1998**
(21) Application number: 93924630.2
(22) Date of filing: 09.11.1993
(51) Int. Cl.: F22B 31/00, F23C 11/02, B01J 8/24

(54) **METHOD AND APPARATUS FOR OPERATING A CIRCULATING FLUIDIZED BED REACTOR SYSTEM**
VERFAHREN UND VORRICHTUNG ZUM BETRIEB EINES REAKTORSYSTEMS MIT ZIRKULIERENDER WIRBELSCHICHT
PROCEDE ET APPAREIL DE COMMANDE D'UN SYSTEME DE REACTEUR A LIT FLUIDISE A CIRCULATION

(30) Priority: 10.11.1992 US 973396; 12.07.1993 US 89810
(43) Date of publication of application: 22.11.1995
(73) Proprietor: Foster Wheeler Energia Oy, 00440 Helsinki (FI)
(72) Inventor: HYPPÄNEN, Timo, FIN-48710 Karhula (FI)
(74) Representative: Görg, Klaus, Dipl.-Ing.
(86) International application number: PCT/FI93/00465
(87) International publication number: WO 94/11671

(56) References cited:
- WO-A-89/05942
- US-A- 4 457 289
- US-A- 4 672 918
- US-A- 5 014 652
- US-A- 5 140 950
- DERWENT'S ABSTRACT, No. 88-131553/19, week 8819; & SU,A,1343183 (ALTAI POLY), 7 October 1987 (07.10.87).

## Description

This invention relates to a novel method and an apparatus for operating a circulating fluidized bed system.

Circulating fluidized bed (CFB) systems, such as CFB combustors include a combustion chamber having a fast fluidized bed of particles therein. A particle separator is connected to a discharge opening in the upper part of the combustion chamber, for separating solid particles from the suspension of flue gases and entrained solid material being discharged from the combustion chamber. One or several return ducts are connected between the particle separator and the lower part of the combustion chamber, for recirculating separated solid particles from the particle separator into the combustion chamber. A gas outlet is arranged in the particle separator for discharging flue gases.

Cyclone separators are commonly used as particle separators. A dip leg type return pipe recirculates the separated particles from the cyclone to the lower part of the combustion chamber. A loop seal is arranged in the return pipe in order to prevent gases from flowing from the combustion chamber backward into the cyclone therethrough.

The circulating fluidized bed reactors are used in a variety of different combustion processes. Depending on the process, different bed materials are fluidized and circulated in the system. In combustion processes particulate fuel such as coal, coke, lignite, wood, waste or peat, as well as other particulate matter such as sand, ash, sulfur absorbent, catalyst or metal oxides can be the constituents of the fluidized bed. The velocity in the combustion chamber usually is in the range of 3,5 to 10 m/s, but can be substantially higher.

Typically heat is recovered from fluidized bed combustion processes by heat transfer surfaces in the combustion chamber and in the convection section disposed in the gas pass after the particle separator. The peripheral walls of the combustion chambers are usually made as membrane walls in which vertical tubes are combined by fins to form evaporating surfaces.

Additional heat transfer surfaces such as superheaters may have to be disposed within the upper part of the combustion chamber for e.g. superheating the steam.

Corrosion and erosion may thereby constitute problems in the high temperature and high flow velocity surroundings in the combustion chamber. Heat transfer surfaces have to be made of heat resistant material often protected by some erosion resistant material or some special constructions have to be utilized. Such heat transfer surfaces are very heavy and expensive, heat resistant material being expensive. Corrosion affects heat transfer surfaces in the gas space of a combustion chamber especially at steam/water temperatures over 400° to 500°C, when burning fuels containing gaseous chlorine and alkali components.

It may also be difficult to achieve desired superheating of steam at low load conditions. The combustion chamber exit gas temperature decreases with decreasing load and the superheaters in the convection section do not have enough capacity to provide the desired results. Additional superheaters arranged within the combustion chamber increase costs and control problems in the boiler.

There has been further need especially at pressurized applications to find new ways to add heat transfer surfaces into the system without having to increase the size of the combustion chamber. In pressurized applications it is even less desirable to have to add the heat transfer surfaces into the combustion chamber and thereby increase the size of the combustor, as it would lead to an increased size of the pressure vessel and huge rise in costs.

It has been suggested to use external heat exchangers (EHE) for increasing the superheating capacity. In EHE superheaters are arranged in a separate fluidized bed reactor with hot circulating solid material, which is introduced into the EHE from the particle separator. The suggested external heat exchangers would be large and expensive, heavy if constructed by uncooled structures, as well as, difficult to control. A more simple and less expensive solution is needed. It has also been suggested (see US patent No. 4,716,856) to include heat transfer surfaces in the recycling system of a circulating fluidized bed reactor. The heat transfer surfaces would be disposed in a fluidized bed of solid circulating material collected in a heat exchanger chamber formed in the bottom part of the return duct. Thus the circulating solid material would provide the additional heat needed for e.g. superheating without a need to arrange separate external heat exchangers. A loop seal in the return duct provides the gas seal needed between the combustion chamber and the particle separator. The solid material is reintroduced from the return duct into the combustion chamber by overflow.

Control of heat transfer in the recycling system has however not been satisfactorily solved yet. It has been suggested to use the fluidizing gas to control the heat transfer. The fluidizing gas is however also used for reintroducing solid material by overflowing from the recycling system into the combustion chamber. It would therefore not be possible to independently control heat transfer or solid material circulation by fluidizing gas at different loads.

Reintroducing the solid material into the combustion chamber by overflow as suggested would keep a constant bed level in the heat exchanger chamber and prevent variations in bed height, which is a clear limitation of the system. It is desireable in many applications to be able to control the height of the bed in order to control the gas sealing effect of the bed and the heat transfer in the bed.

Further due to the overflow a less efficient mixing of solid material and hence less efficient heat transfer is achieved in the heat exchanger chamber. Solid material introduced onto the surface of the bed is only partly mixed into the bed. Material not mixed into the bed is immediately discharged through the overflow opening, without heat transfer to the bed or heat transfer surfaces.

Still further due to the overflow large and heavy particles tend to more easily fall into the bed and less efficiently circulate in the bed, but rather accumulate on the bottom of the heat exchanger chamber without being reintroduced into the combustion chamber. The big particles may cause problems in heat transfer, fluidization and solid flow, as well as, cause erosional problems.

An apparatus according to the preamble of claim 14 is known from US-A-5 140 950. The known apparatus comprises a circulating fluidized bed combustion system and method including a recycle heat exchange section. The flue gases and entrained solids from the fluidized bed in the furnace section are separated, the flue gases are passed to a heat recovery section, and the separated particulate material is passed directly to an inlet compartment via a dipleg. The recycle heat exchange section includes a bypass chamber for permitting the separated solids to pass directly from the inlet compartment to the furnace section. Heat exchange tubes are provided in the heat exchange compartment of the heat exchange section to transfer heat from the separated material. This separated material is then passed back to the furnace section. Air can be introduced into the inlet compartment below the dipleg and in alignment therewith to control the flow of separated material from the separator and, therefore, the recycle rate.

It is an object of the present invention to provide a method and an apparatus for operating circulating fluidized bed systems in which the above mentioned drawbacks are minimized.

It is also an object of the present invention to provide an improved method for heat recovery in circulating fluidized bed systems.

It is further an object of the present invention to provide an improved method for controlling heat recovery in circulating fluidized bed systems.

It is still further an object of the present invention to provide an improved method and apparatus for improving solid mixing and heat transfer in a heat transfer section in a recycling system, as well as, minimizing problems with big particles accumulating therein.

This is achieved by the method and circulating fluidized bed reactor system according to the appended claims.

According to the present invention there is provided a method of operating a CFB system comprising the steps of
(a) establishing a fast fluidized bed of solid particles in the combustion chamber so that a particle suspension comprising flue gases and solid particles entrained therein is caused to flow upwardly in the combustion chamber,
(b) collecting solid particles separated from the gas and particle suspension,
(c) directing collected solid particles and/or solid particles from the combustion chamber into a return duct,
(d) establishing a bed of solid particles in the lower part of the return duct, the bed of solid particles having separately a heat transfer section a particle transport section, and a top surface, wherein the bottom level of the heat transfer section is at a higher level than the bottom of the particle transporting section,
(e) recovering heat from the bed of solid particles in the heat transfer section with heat transfer surfaces disposed therein,
(f) controlling heat transfer in the heat transfer section of the bed of solid particles by introducing fluidizing gas into the bed of solid particles in the heat transfer section through fluidizing gas inlets,
(g) controlling transporting of the solids by introducing transporting gas separately from the fluidizing gas into the bed of solid particles in the particle transport section through transporting gas inlets, and
(h) transporting solid particles with the transporting gas through at least one solid particle inlet into the combustion chamber, the solid particle inlet being arranged at a level below the surface level of the bed of solid particles.

The heat transfer section and the particle transporting section may thus according to a preferred embodiment of the invention be formed in the lower part of the return duct in a solid bed chamber in one and the same bed of solid particles, wherein the particles are free to flow from one section to the other, the main particle stream flow being however from bed surface via heat exchanger section to the particle transport section and solid particle inlet.

There is according to a preferred embodiment of the present invention a barrier bed portion of only slightly or non-fluidized particles established within the bed of solid particles formed between the fluidizing gas inlets and the transporting gas inlets, e.g. in the region between the heat transfer section and the particle transporting section, for preventing transporting gas from interfering with heat transfer and fluidizing gas from interfering with reintroduction of particles into the combustion chamber.

According to the present invention, the bottom of the heat transfer section is disposed at a higher level than the bottom of the particle transport section. Fluidizing gas is then introduced into the solid bed of particles at a higher level than transporting gas.

The particles in the return duct are preferably directly recycled into the combustion chamber, but can be if needed recycled into an intermediate chamber which has further connection with the combustion chamber.

The bed in the lower part of the return duct is formed of solid particles circulating in the CFB system, these particles having a smaller particle size distribution than the mean size distribution of the total mass of particles in the whole reactor system. The small size of the particles being advantageous for heat transfer in the return duct.

The heat transfer from particles to heat transfer surfaces, such as superheater surfaces, in the heat transfer section is according to a preferable embodiment of the invention controlled by introducing a fluidizing gas flow into at least a part of the heat transfer section. An increased gas flow and increased movement of particles around the heat transfer surfaces provides an increased heat transfer. Gas, such as air or inert gas for heat transfer control may be introduced through several separate nozzles.

According to another preferred embodiment of the invention the heat transfer in the heat transfer section may be controlled by controlling the flow of transporting gas introduced into the particle transporting section. According to this embodiment the bed surface level may be held at a constant level by having a portion of the solid particles directly transported by overflow into the combustion chamber. Only a controlled portion of the particles is allowed to flow through the bed and the heat transfer section, which portion is controlled by controlling the transporting gas flow discharging solid particles through the solid particle inlet(s) below the bed surface level.

By decreasing the amount of solid material being transported through the solid particle inlet(s) and correspondingly increasing the overflow of particles into the combustion chamber an increased amount of particles only reaches the surface of the bed of solid particles before being reintroduced into the combustion chamber. A decreased amount of solid particles flows through the heat transfer section. The temperature in the bed decreases, as well as, heat transfer due to decreased temperature difference between particles and heat transfer surfaces.

By increasing the amount of solid material being transported through the solid particle inlet(s) an increased amount of fresh hot solid material may continuously be transported through the bed and heat transfer section increasing the temperature and heat transfer in the bed.

In the bottom of the return duct the bed moves slowly downward as solid material is reintroduced into the combustion chamber and new material is continuously added on top of the bed. The height of the bed may according to a preferred embodiment of the invention be controlled by controlling the transporting gas reintroducing solid material into the combustion chamber. The height of the bed may then in some cases be used to control the heat transfer.

The bed of solid particles in the return duct constitutes a gas seal for preventing combustion gases from flowing backwards from the combustion chamber through the solid particle inlet(s) into the return duct. The gas seal effect may be controlled by controlling the transporting gas i.e. independently from the fluidizing gas controlling heat transfer.

Solid material is according to a preferred embodiment of the invention reintroduced into the combustion chamber through one or several vertically narrow horizontal slot like passages, e.g. one or several L-valves, on top of each other, forming the solid particle inlets. The narrow slot like passages between the return duct and the combustion chamber are filled with a mass of solid particles, which due to the construction of the passages is not able to flow by itself therethrough. The passages thereby constitute solid flow gas seals controlling the flow of particles from the return duct into the combustion chamber. The flow through the passages may thereby also control the total height of the bed in the return duct and the gas sealing effect of the bed between the combustion chamber and the particle separator.

The flow through the passages is controlled by controlling the flow of transporting gas in the vicinity of the passages. The transporting gas imparts a motion to the particles in and around the slot like passages, transporting particles through the passages into the combustion chamber.

The solid flow gas seal effect of a passage depends on the ratio (h/l) between the vertical extension (h) of the passage and the length (l) of the passage. The ratio (h/l) should according to one preferred embodiment of the invention for horizontal passages be smaller than 0.5 in order to prevent solids from flowing uncontrollably by themself through the passages. The smaller the vertical extension (h) of the passages the shorter can be the length (l) of the passage.

For example in some applications a passage having a height of about 100 mm and length of about 200 mm, disposed in a 200 mm thick wall would suffice to establish a solid flow seal able to control solid flow in the return duct and solid bed chamber.

The cross section of the passages taken in the plane of the wall is preferably rectangular and slot like, but passages having square or round cross sections may be preferable in some applications.

The passages can be made inclined having outlet ends in combustion chamber on a higher level than inlet ends in return duct, this incline for preventing coarse material from accumulating at the inlet end of the passages. In inclined passages, the length (l) of the passage can be further decreased compared to horizontal passages having the same cross section.

The total vertical extension hₜₒₜ needed for an imaginary single large passage can according to one important aspect of the invention thereby be divided into several vertical extensions h₁, h₂, h₃ ..., each divided vertical extension being just a fraction of the total hₜₒₜ needed. The length (l) of each passage can then be decreased in the same proportion as the vertical extension is decreased, without the sealing effect of the solid flow being decreased.

According to a preferred embodiment of the invention short passages, only long enough to extend through a common usually refractory lined membrane wall, between the particle transport section and combustion chamber, can be used for transporting particles from the return duct into the combustion chamber, while still providing an adequate solid flow seal.

The passages have approximately a length (l) = the total width (w) of the common wall between the particle transport chamber and combustion chamber, the width of the wall including tubes and refractory lining. This is a considerable improvement over prior art L-valve seals, reaching far out from the combustion chamber and being very space consuming. The present invention provides a very compact solution in which the solid flow seal can be integrated into the wall construction.

The solid flow passages may easily be formed in the fins combining the tubes in a membrane tube wall. In most cases the passages may be formed in a wall section where tubes have been bent further apart from each other and where the tubes are combined by broad fins, broad enough to provide the space needed for the passages. The passages may be arranged on top of each other, forming e.g. a Ahlstrom "gill seal" solid flow seal connection, and combined in prefabricated frames.

The present invention provides an improved method for controlling solid flow from the return duct into the combustion chamber. The transporting gas for transporting solids through the solid particle inlet(s) may be introduced through gas inlets, nozzles or openings, in the bottom of the return duct or/and through gas inlets in a wall in the vicinity of the solid particle inlets. By controlling the amount of transporting gas through different gas inlets and possibly at different levels or locations it is possible to control the amount of solids flowing through the solid particle inlets. Transporting gas introduced through gas inlets in the bottom of the return duct may reintroduce solid particles through all solid particle inlets, whereas transporting gas introduced through gas inlets higher up, on a side wall, mainly reintroduces solid particles through inlets higher up in the return duct.
Air from the fluidized bed reactor windbox or air from a separate blower, preferably at a slightly higher pressure, or some other cheap gas, e.g. recycled flue gas, may be used as transporting gas. Other inert gases could also be used especially if inert, non-oxidizing conditions are needed.

Transporting gas is according to a preferred embodiment of the invention introduced into the bed of solid particles in the return duct at a location or locations from which it flows mainly towards the solid particle inlet(s) and not to the heat transfer zones in the return duct.

Preferably a portion of the solid particle bed portion in the particle transporting section constitutes a barrier bed preventing gas from flowing from the heat transfer section into the transporting section or vice versa.

A barrier bed portion of solid particles maintained mainly between the transporting gas inlets and the heat transfer section, i.e. a barrier bed in the transporting section, prevents transporting gas from interfering with the heat transfer. Whereas a barrier bed portion of solid particles maintained in the heat transfer section prevents fluidizing gas from interfering with the transport of solid particles through the bed. In most cases both above mentioned goals may be achieved with one and the same barrier bed portion.

The present invention may be applied in fluidized bed reactor systems having a solid bed chamber in the return duct with an inclined bottom, the lowermost part of the bottom being connected to the combustion chamber. A heat transfer section is then formed above the upper portion of the inclined bottom. A particle transporting section, for reintroducing solid material into the combustion chamber, is formed on the lower portion of the inclined bottom. A partition wall may be disposed on the inclined bottom between the heat transfer and particle transporting sections. Fluidizing gas is introduced through the upper inclined bottom portion into the heat transfer section. Transporting gas is introduced through the lower portion of the inclined bottom into the particle transporting section. A barrier bed of e.g. only slightly fluidized particles is maintained preferably on the lower portion of the inclined bottom, for forming a barrier bed preventing transporting gas from interfering with the heat transfer and preventing the fluidizing gas from interfering with the transporting of solid particles through the at least one solid particle inlet.

The particle transporting section may be formed below the heat transfer section on a downward directed duct or channel portion connected to the combustion chamber, through vertically narrow passages forming solid flow seals.

The present invention provides the advantage of providing a method for independently controlling the fluidizing gas flow and the transporting gas flow in the return duct, and thereby independently controlling heat transfer effect and gas seal effect in the return duct.

Heat transfer effect may be controlled by location and/or flow rate of fluidizing gas flow in the heat transfer zone while bed height or particle flow through bed is controlled by the transporting gas flow. It may also to some extent be possible to control the heat transfer by controlling the total height of the bed, especially if a part of the heat transfer surfaces extends above the bed.

A further important advantage is the improvement in mixing of particles and improvement in heat transfer achieved by being able to transport particles mainly through the whole bed in the return duct and not immediately discharging a portion of the particles by overflow.

A further advantage is achieved as only very small amounts of transporting gas compared to the amount of fluidizing gas in the heat transfer section is needed for transporting solid particles through the vertically narrow inlets into the combustion chamber.

Also relatively small fluidizing gas velocities of 0, or just above 0, to 1 m/s are all that are necessary to provide a suitable heat transfer. The fluidizing gas needed may primarily be discharged from the return duct into the combustion chamber through openings arranged above the bed. A gas seal is often needed in the uppermost part of the return duct for preventing the fluidizing gas from flowing into the particle separator. In some cases the gas flow needed to control the heat transfer may even be so small that it may be allowed to flow up into the separator.

The gas space in the heat transfer zone containing primarily clean fluidizing gas without alkaline, chlorine or other corrosive gaseous components, provides very advantageous conditions for superheating. The superheaters may here be heated to much higher temperatures than what normally is the case in corrosive conditions prevailing in the combustion chamber itself. According to the invention, steam of > 500°C, even > 550°C, may also be produced also when burning corrosive gaseous components containing fuels.

It has especially been a problem in waste/RDF burning boilers to utilize the heat for superheating, due to the unclean exhaust gases, containing different kinds of corrosion causing components. The present invention provides a system in which superheater surfaces contacts hot circulating material in a safe gas atmosphere.

Also erosion is minimized in the slowly bubbling bed having gas velocities of < 1 m/s, e.g. 40 cm/s, whereby particles colliding with the heat transfer surfaces have a very low impact velocity. Additionally erosion in the present return duct bed is relatively low due to the small particle size of bed material.

When dividing the bed in the solid bed chamber into a heat transfer section and a particle transporting section by an inclined bottom or a separate lower outlet channel portion in the return duct, large particles, e.g. ash particles, agglomerates formed in the bed or refractory material broken loose from the return duct walls, fall by gravity downward in the return duct below the fluidizing gas inlet level and away from the heat transfer zone, where they could cause mechanical damage and other problems, such as decrease in heat transfer.

The present invention provides a very simple CFB boiler construction. The entire recycling system including the separator and return duct may be constructed of two at least partly parallel vertical water tube wall panels forming a primarily vertical channel therebetween. The channel preferably having one wall at least partly in common with the combustion chamber, the walls being - e.g. - tube walls or membrane walls such as typically used in boilers. The channel forming a separator in its upper part, a return duct in its middle part and a solid bed chamber in its lowermost part. The solid inlet connecting the return duct with the combustion chamber may be prefabricated in the common wall as a frame like construction having several inlet passages. Such a frame structure may also easily be connected to the membrane wall on site. There is no need for complicated big conventional loop seal constructions.

The present invention provides a great improvement especially in pressurized fluidized bed systems, as additional heat transfer surfaces can be located in the return duct at an usually free space in the system. Additionally heat transfer can be controlled by relatively small equipment.

### BRIEF DESCRIPTION OF DRAWINGS

The invention will be described further, by way of example, with reference to the accompanying drawings in which
FIG. 1 is a schematic vertical section through a circulating fluidized bed apparatus according to one exemplary embodiment of the invention; and
FIG. 2 and 3 are schematic vertical sections through circulating fluidized bed apparatuses according to other exemplary embodiments of the invention.

### DETAILED DESCRIPTION OF THE DRAWINGS

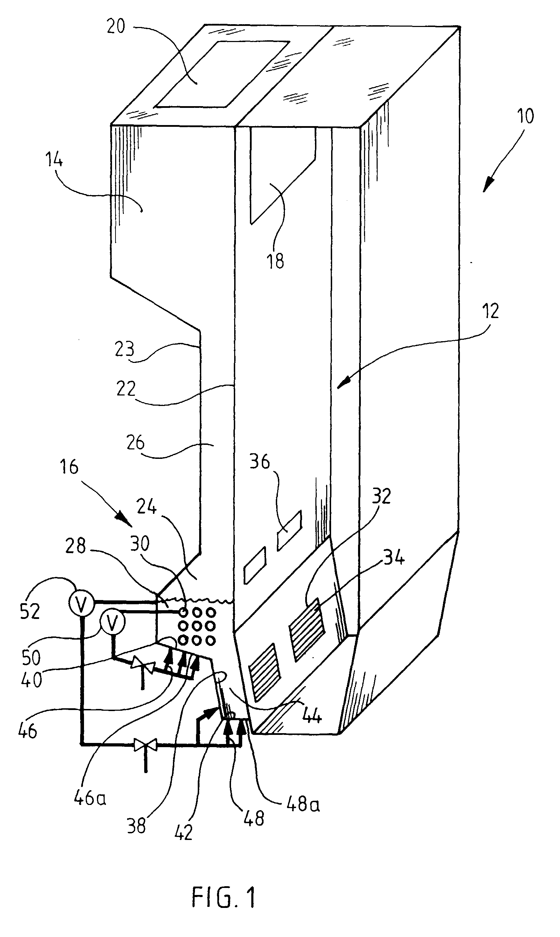

FIG. 1 shows a circulating fluidized bed combustor having a combustion chamber 12 with an expanded fluidized bed of particles therein. A particle separator 14 is connected to the upper part of the combustion chamber 12, for separating particles entrained with the mixture of flue gases and solid material being discharged from the combustion chamber. A return duct 16 is provided for recirculating separated solid material from the separator into the lower part of the combustion chamber. A discharge opening 18 connects the particle separator 14 to the combustion chamber 12. A gas outlet 20 is arranged in the particle separator 14.

The walls of the combustion chamber 12, the separator 14 and the return duct 16 are mainly made of water tube or membrane panels. The panels in the bottom part of the combustion chamber and the return duct may be protected by a refractory lining (not shown in Fig. 1). A wall 22 forms a common wall between the combustion chamber 12 and the separator 14 and the return duct 16. One single membrane panel may form a second wall 23 in the particle separator and the return duct, the wall 23 being mainly parallel with the common wall 22. Beneath the particle separator the second wall 23 is bent towards the common wall 22 in order to form the return duct 16.

In the lower part of the return duct the wall 23 is bent outward to form a solid particle chamber or a heat exchanger chamber 24 therein having a larger horizontal cross section than the upper part 26 of the return duct. A bubbling bed 28 of recycling particles is provided in the heat exchanger chamber 24. Heat transfer surfaces 30 are disposed in the bed 28.

Solid particle inlets 32 are formed in the lower part of the common wall 22 for allowing solid particles to be transported from the heat exchanger chamber 24 into the combustion chamber 12. The solid particle inlets constitute several narrow slot like passages or openings 34 arranged on top of each other.

Gas inlets 36 are formed in the common wall 22 at a level above the surface level of the bed 28, for connecting the gas space of the return duct 16 with the combustion chamber 12.

The bottom 38 of the heat exchanger chamber 24 is staged or formed in two steps an upper portion 40 and a lower portion 42. A lowermost portion 44 of the heat exchanger chamber is formed adjacent the lowermost part of the combustion chamber. The solid particle inlets 32 connect the lowermost portion 44 of the heat exchanger chamber with the lowermost part of the combustion chamber.

Fluidizing gas nozzles or inlets 46 are disposed at a first level 46a in the upper bottom portion 40 of the return duct bottom 38, for introducing fluidizing gas into the heat exchanger chamber 24, e.g. at a rate of just above 0 to 1 m/s (e.g. about 40 cm/s). Transporting gas nozzles or inlets 48 are disposed at a second level 48a in the lower bottom portion 42 of the return duct bottom 38, for introducing transporting gas for transporting solid particles through solid particle inlets 32 into the combustion chamber. The lowermost portion 44 of the bed between the first and second levels 46a and 48a constitutes a solid particle gas seal preventing fluidizing gas from interfering with the transporting of particles through inlets 32 and preventing transporting gas from interfering with the fluidization of bed particles in the heat transfer zone.

By controlling the flow of fluidizing gas it is possible to control the heat transfer in the heat exchanger chamber 24 in the return duct. The heat transfer may be measured by sensors 50 and used to control the fluidizing gas flow.

By controlling the flow of transporting gas it is possible to control the amount of particles being reintroduced through inlets 32 from the return duct into the combustion chamber and thereby control the total height of the bed 28 and its gas seal effect. The surface level of the bed 28 may be measured with a surface level sensor 52 and used to control the transporting gas flow. The surface level (top surface) may vary within certain limits. When the upper surface of the bed 28 reaches the gas inlet openings 36 particles start to flow over into the combustion chamber and the bed level will normally not further rise. The bed top surface should normally not be allowed to decrease to a level below the heat transfer surfaces 30, as erosion of heat transfer surfaces may become a problem in the gas atmosphere due to strands of particles falling downward at a high velocity. But in some cases especially with small particles in the system there may be an advantage in controlling heat transfer with the height of the bed 28.

The lowermost portion of the heat exchanger chamber 24 may be divided into several sections provided horizontally one after the other along the common wall 22 and each having a solid particle inlet 32 therein. By controlling solid flow through different inlets 32 also solid flow over different sections of the heat transfer section can be controlled. Decreased solid flow through an inlet decreases also solid flow through corresponding upstream heat transfer section and leads to decreased heat transfer in that particular section.

The lowermost portion of the return duct 16 in Fig. 1 constitutes a channel 44 formed adjacent and parallel with wall 22 of the combustion chamber 12. The lowermost portion could be formed as a duct extending downwards from any other part of the bottom 40, as long as a barrier bed can be formed to prevent transporting gas and fluidizing gas from interfering with each other. The downward extending duct could be connected to the wall 22 at any suitable location.

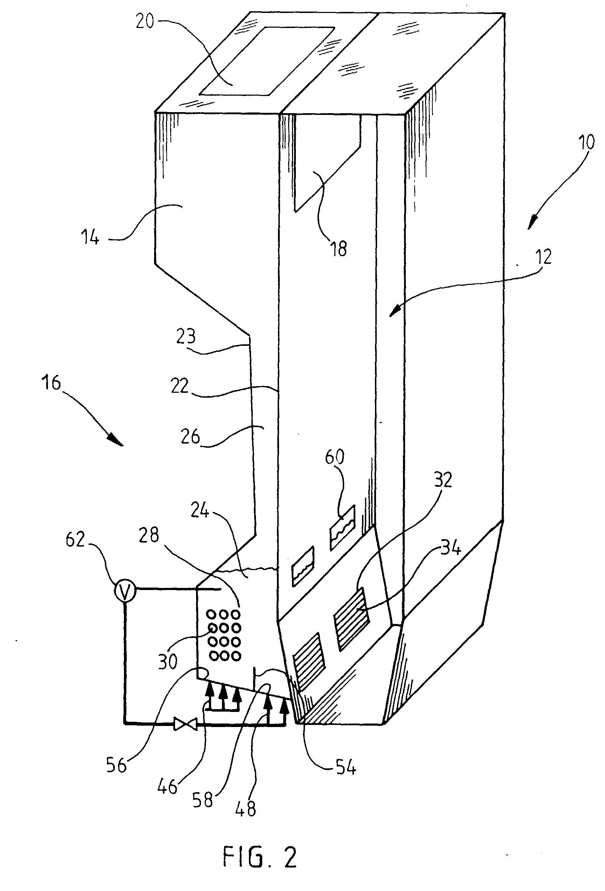

FIG. 2 shows another embodiment of a circulating fluidized bed combustor according to the present invention, the combustor having a modified return duct and heat exchanger chamber construction. In Fig.2 structures comparable to those in FIG. 1 embodiment are shown by the same reference numeral as in FIG. 1.

The bottom 38 of the heat exchanger chamber 24 in the return duct is inclined and divided by a small partition 54, only reaching a short distance above the bottom, into an upper and lower bottom portion 56 and 58. The height of the partition 54 is preferably less than half the height of the bed. Fluidizing gas is introduced into the bed 28 through fluidizing gas inlets 46 arranged in the upper bottom portion 56 and transporting gas inlets 48 are arranged in the lower portion 58 of the bottom 38. The lower portion 58 is disposed adjacent to a lower part of the common wall 22 having the solid particle inlet(s) therein.

The partition is designed to separate a bed of particles on the lower bottom portion from a bed of particles on the upper bottom portion in order to prevent direct access of transporting gas from the inlets 58 to the bed area with heat transfer surfaces 30 and/or fluidizing gas from entering the bed area in vicinity of the solid particle inlets 32. A preferably primarily non-fluidized bed portion of particles is formed above the lower bottom 58 between the partition 54 and the common wall 22. This bed portion forms a gas seal preventing fluidizing and transporting gases from interfering with each other.

The inlets 32 are designed to be able to reintroduce only a portion of the solid particles entering the return duct, into the combustion chamber. Overflow openings 60 at a higher level in the wall 22, than bed surface level are usually desirable.

The heat transfer may be controlled by controlling the flow V_{b} of solid particles through inlets 32. The temperature in the bed 28 and thereby heat transfer can be increased by increasing the flow V_{b} and by correspondingly decreasing the overflow Vₒ of particles through overflow openings 60.
A temperature measuring sensor 62 may be used to control the transporting gas flow V_{b}.

A gas lock is arranged in the upper end of the return duct if needed to prevent fluidizing gas from entering the particle separator.

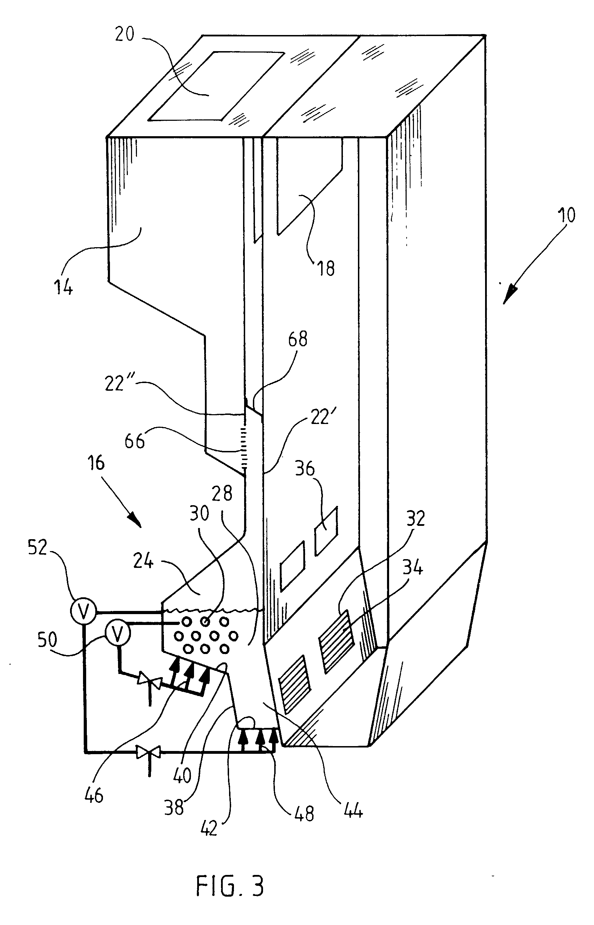

FIG. 3 shows still another embodiment of the present invention. Same reference numerals are used as in Fig.1 embodiments for comparable structures FIG. 3 shows a different common wall 22 design. The wall connecting the combustion chamber 12 and the separator 14 is of a double wall design, including two parallel walls 22'and 22" spaced at a small distance from each other. The first wall 22' is a side wall in the combustion chamber and the second wall 22" is a side wall in the particle separator. The combustion chamber and the separator do not have a common wall.

The lower parts of the double walls 22'and 22" are being used to form the return duct 16 and the heat exchanger chamber 24. The first wall 22' forms a primarily vertical side wall common with the combustion chamber. The second wall 22" is substantially parallel to the first wall 22'in its uppermost part, forming together with the first wall 22' a double wall between the particle separator and the combustion chamber.

In the lower part of the combustor first and second walls 22' and 22" form the return duct 16 therebetween. The second wall 22'' is in the lower part of the return duct bent outwardly to form the heat exchanger chamber 24. The second wall 22'' is further finally bent inwardly in its lowermost part to form the lowermost part 44 of the heat exchange chamber 24. An opening 66 forming a solid flow gas seal is formed in the second wall 22". The opening 66 connects the lower part of the particle separator with the upper part of the return duct and allows recycling particles to enter the return duct. An obstacle 68 is disposed between the first and second walls 22'and 22" above the opening 66 to prevent gas or particles to flow into the space between the two walls 22'and 22".

The heat exchanger chamber in FIG. 3 includes the same elements as the heat exchanger chamber in FIG 1. Additionally a large particle outlet is arranged in the lowermost part 44 of the heat exchanger chamber.

While the invention has been described in connection with what is presently considered to be most practical and preferred embodiments of the invention, it is to be understood that the invention is not to be limited to the disclosed embodiments, but on the contrary, is intended to cover various modifications and equivalent arrangements included within the scope of the appended claims.

For example several heat' transfer and particle transporting sections could be arranged horizontally one after the other along the wall 22 of the combustion chamber. Transporting gas could then be used to transport particles horizontally in a direction parallel with the wall 22 from one section to another. Both heat transfer and transportation of particles can then be individually controlled or even stopped by controlling or stopping gas flow introduced into different sections.

In fluidized bed reactors there may be several return ducts some of them being conventional return ducts others having heat transfer sections in their lower parts as discussed previously.

Further it may also be possible to introduce solid particles through openings in the common wall directly from an internal solid circulation inside the combustion chamber into a return duct according to the present invention.

## Claims

1. A method of operating a circulating fluidized bed system, utilizing a combustion chamber, having a fluidized bed of solid particles therein, a particle separator connected to a discharge opening in the upper part of the combustion chamber, one or several return ducts connected in their upper parts to the particle separator and in their lower parts to the combustion chamber through at least one solid particle inlet, and a gas outlet in the particle separator, the method comprising the steps of:
- establishing a fast fluidized bed of solid particles in the combustion chamber so that a particle suspension comprising flue gases and solid particles entrained therein is caused to flow upwardly in the combustion chamber,
- collecting solid particles separated from the gas and particle suspension,
- directing collected solid particles and/or solid particles from the combustion chamber into a return duct,
- establishing a bed of solid particles in the lower part of said return duct, the bed having a heat transfer section, a particle transport section, and a top surface, wherein the bottom level of the heat transfer section is at a higher level than the bottom of the particle transporting section,
- recovering heat from the bed of solid particles in the heat transfer section of the bed with heat transfer surfaces disposed therein,
- controlling heat transfer in the heat transfer section of the bed of solid particles by introducing fluidizing gas into the bed of solid particles in the heat transfer section through fluidizing gas inlets,
- controlling transporting of the solids by introducing transporting gas separately from the fluidizing gas into the bed of solid particles in the particle transport section through transporting gas inlets, and
- transporting solid particles from the bed with the transporting gas through at least one solid particle inlet into the combustion chamber, the solid particle inlet being arranged at a level below the surface level of the bed of solid particles.

2. A method as recited in claim 1, characterized by preventing transporting gas from interfering with heat transfer in the heat transfer section, preventing fluidizing gas from interfering with transporting of particles through solid particle inlet into the combustion chamber, or both, by disposing a barrier bed of solid particles in the bed of solid particles between the fluidizing gas inlets and the transporting gas inlets.

3. A method as recited in claim 1, characterized by preventing transporting gas from interfering with the heat transfer in the heat transfer section, by providing a barrier bed of solid particles in the bed of solid particles between the transporting gas inlets and the heat transfer section.

4. A method as recited in claim 1, characterized by preventing fluidizing gas from interfering with the discharging of solid particles through the solid particle inlet, by disposing a barrier bed of solid particles in the bed of solid particles between the fluidizing gas inlets and the solid particle inlet.

5. A method as recited in claim 1, characterized in that
- the fluidizing gas inlets are disposed on an upper portion of an inclined bottom of the return duct,
- the transporting gas inlets are arranged on a lower portion of the inclined bottom, and
- a partition wall is disposed on the inclined bottom between the upper and lower portions thereof,
and that the step of introducing transporting gas is practiced so that a barrier bed of solid particles is maintained on the lower portion of the inclined bottom, preventing transporting gas from interfering with the heat transfer.

6. A method as recited in claim 1, characterized in that
- the fluidizing gas inlets are disposed on an upper portion of an inclined bottom of the return duct,
- the transporting gas inlets are disposed on a lower portion of the inclined bottom, and
- a partition wall is disposed on the inclined bottom between the upper and lower portions thereof,
and that the step of introducing transporting gas is practiced so that a barrier bed of solid particles is maintained on the lower portion of the inclined bottom for preventing the fluidizing gas from interfering with the transporting of solid particles through the at least one solid particle inlet.

7. A method as recited in claim 1, characterized by controlling heat transfer in the heat transfer section by controlling the fluidizing gas being introduced into the heat transfer section.

8. A method as recited in claim 1, characterized by transporting solid particles from the return duct into the combustion chamber by overflow through an overflow inlet disposed above the transporting section.

9. A method as recited in claim 9, characterized by controlling heat transfer in heat transfer section by controlling the amount of solid particles being transported with transporting gas through the at least one solid particle inlet.

10. A method as recited in claim 1, characterized by transporting solid particles through several horizontal narrow slot-like openings, having a height (h) to length (1) ratio (h/l) < 0.5, with transporting gas into the combustion chamber.

11. A method as recited in claim 2, characterized in that the barrier bed is formed of mainly non-fluidized portion of solid particles in the solid particle bed.

12. A method as recited in claim 1, characterized by the fluidized bed of solid particles providing a gas seal between the particle separator and the combustion chamber being established in the lower part of the return duct.

13. A method as recited in claim 1, characterized by the step of introducing the fluidizing gas being practiced to introduce said gas at a rate of between just above 0 and 1 m/s.

14. A circulating fluidized bed reactor system having:
- a combustion chamber (12), having a fast fluidized bed of particles therein and a discharge opening (18) in an upper part thereof,
- a particle separator (14) connected to the discharge opening (18) in the upper part of the combustion chamber (12),
- a gas outlet (20) in the particle separator (14),
- one or several return ducts (16) having an upper part (26) connected to the particle separator (14) and a lower part connected to the combustion chamber (12),
- at least one return duct (16) having means for collecting solid particles separated from a particle suspension flowing upwardly in the combustion chamber (12),
- a bed (28) of solid particles in the return duct (16) having a heat transfer section and a particle transport section within said bed (28),
- heat transfer surfaces (30) in the heat transfer section of the bed (28) for recovering heat from the bed (28) of solid particles,
- fluidizing gas inlets (46) for introducing fluidizing gas into the heat transfer section of the bed (28) of solid particles for controlling heat transfer,
- at least one solid particle inlet (32) arranged below the surface level of the bed (28) of solid particles, for connecting the bed (28) of solids in the return duct (16) with the combustion chamber (12), and
- transporting gas inlets (48) for introducing transporting gas into the particle transporting section of the bed (28) of solid particles, for transporting solid particles through the at least one solid particle inlet (32) into the combustion chamber (12),
characterized in that
- the bottom level (40, 46a, 56) of the heat transfer section is at a higher level than the bottom (42, 48a, 58) of the particle transport section.

15. A circulating fluidized bed reactor system as recited in claim 14, characterized in that the return duct (16) has a staged bottom with at least an upper bottom portion (40) and a lower bottom portion (42), the heat transfer section being formed on the upper bottom portion (40) and the particle transport section being formed on the lower bottom portion (42).

16. A circulating fluidized bed reactor system as recited in claim 14, characterized in that a barrier bed of solid particles is formed in the bed (28) of solid particles between the fluidizing gas inlets (46) and the transporting gas inlets (48), for preventing transporting gas from interfering with heat transfer in the heat transfer section, for preventing fluidizing gas from interfering with transporting of particles through solid particle inlet (32) into the combustion chamber (12), or both.

17. A circulating fluidized bed reactor system as recited in claim 14, characterized by a barrier bed of solid particles containing mainly non-fluidized solid particles is formed in the transport section.

18. A circulating fluidized bed reactor system as recited in claim 14, characterized by an inclined bottom (56, 58) and a partition (54) dividing the bottom into an upper (56) and lower (58) portion, the heat transfer section disposed above the upper bottom portion (56) and the particle transport section being disposed above the lower bottom portion (58).

19. A circulating fluidized bed reactor system as recited in claim 14, characterized by including means for controlling the introduction of fluidizing gas for controlling heat transfer in the heat transfer section.

20. A circulating fluidized bed reactor system as recited in claim 14, characterized by including at least an overflow inlet (60) above the heat transfer section for introducing particles by overflow into the combustion chamber (12) and means for controlling the introduction of transporting gas into the particle transporting section for controlling heat transfer.

21. A circulating fluidized bed reactor system as recited in claim 14, characterized in that said at least one solid particle inlet (32) includes a narrow slot like opening (34) having a height (h) to length (l) ratio (h/l) < 0.5.

22. A circulating fluidized bed reactor system as recited in claim 14, characterized by including a common wall (22, 22', 22") between the return duct (16) and the combustion chamber (12) and said at least one solid particle inlet (32) having a length of approximately the width of the common wall (22, 22', 22").

23. A circulating fluidized bed reactor system as recited in claim 22, characterized by a double wall (22', 22") between the particle separator (14) and the combustion chamber (12).

## Patentansprüche

1. Verfahren zum Betreiben eines zirkulierenden Wirbelschichtreaktorsystems unter Nutzung einer Brennkammer, umfassend eine Wirbelschicht aus Partikeln darin, einen mit einer Ablaßöffnung im oberen Teil der Brennkammer verbundenen Partikelabscheider, einen oder mehrere Rückführkanäle, die an ihrem oberen Teil mit dem Partikelabscheider und ihrem unteren Teil über zumindest einen Feststoffpartikeleinlaß mit der Brennkammer verbunden sind, und einen Gasauslaß im Partikelabscheider, welches Verfahren folgende Schritte umfaßt:
- Zustandebringen einer schnellen Wirbelschicht aus Feststoffpartikeln in der Brennkammer, so daß eine aus Rauchgasen und von ihnen mitgeführten Feststoffpartikeln bestehende Partikelsuspension veranlaßt wird, in der Brennkammer aufwärts zu fließen,
- Auffangen von Feststoffpartikeln, die aus der Gas- und der Partikelsuspension abgeschieden worden sind,
- Leiten der gesammelten Feststoffpartikel und/oder Feststoffpartikel aus der Brennkammer in den Rückführkanal, und
- Zustandebringen eines Feststoffpartikelbetts im unteren Teil des Rückführkanals, welches Bett eine Wärmeübertragungszone, eine Partikelförderzone und eine Oberfläche hat, wobei das untere Niveau der Wärmeübertragungszone auf höherem Niveau liegt als der untere Teil der Partikelförderzone,
- Rückgewinnung von Wärme aus dem Feststoffpartikelbett in der Wärmeübertragungszone des Betts mittels darin angeordneten Wärmeübertragungsflächen,
- Regelung des Wärmeübergangs in der Wärmeübertragungszone des Feststoffpartikelbetts durch Einführung von Fluidisierungsgas in das Feststoffpartikelbett in der Wärmeübertragungszone durch Fluidisierungsgaseinlässe,
- Regelung der Beförderung der Feststoffe durch Einführung von Trägergas getrennt vom Fluidisierungsgas in das Feststoffpartikelbett in der Partikelförderzone durch Trägergaseinlässe, und
- Beförderung von Feststoffpartikeln vom Bett mit dem Trägergas durch zumindest einen Feststoffpartikeleinlaß in die Brennkammer, welcher Feststoffpartikeleinlaß auf einem Niveau unter dem Oberflächenniveau des Feststoffpartikelbetts angeordnet ist.

2. Verfahren nach Anspruch 1, dadurch gekennzeichnet, daß eine Störung des Wärmeübergangs in der Wärmeübertragungszone durch Trägergas verhindert wird, und eine Störung der Beförderung von Partikeln durch den Feststoffpartikeleinlaß in die Brennkammer durch das Fluidisierungsgas verhindert wird, oder beides, in dem ein Sperrbett aus Feststoffpartikeln im Feststoffpartikelbett zwischen Fluidisierungsgaseinlässen und Trägergaseinlässen angeordnet wird.

3. Verfahren nach Anspruch 1, dadurch gekennzeichnet, daß eine Störung des Wärmeübergangs in der Wärmeübertragungszone durch Trägergas verhindert wird, indem ein Sperrbett aus Feststoffpartikeln im Feststoffpartikelbett zwischen Trägergaseinlässen und Wärmeübertragungszone vorgesehen wird.

4. Verfahren nach Anspruch 1, dadurch gekennzeichnet, daß eine Störung des Ablaufens von Feststoffpartikeln durch den Feststoffpartikeleinlaß durch Fluidisierungsgas verhindert wird, indem ein Sperrbett aus Feststoffpartikeln im Feststoffpartikelbett zwischen den Fluidisierungsgaseinlässen und dem Feststoffpartikeleinlaß angeordnet wird.

5. Verfahren nach Anspruch 1, dadurch gekennzeichnet, daß
- die Fluidisierungsgaseinlässe in einem oberen Teil eines geneigten Bodens des Rückführkanals angeordnet sind,
- die Trägergaseinlässe in einem unteren Teil des geneigten Bodens angeordnet sind, und
- eine Trennwand auf dem geneigten Boden zwischen seinem oberen und unteren Teil angeordnet ist,
und daß der Schritt zur Einführung von Trägergas solcherart durchgeführt wird, daß ein Sperrbett aus Feststoffpartikeln auf dem unteren Teil des geneigten Bodens zustande gebracht wird, wodurch eine Störung des Wärmeübergangs durch Trägergas verhindert wird.

6. Verfahren nach Anspruch 1, dadurch gekennzeichnet, daß
- die Fluidisierungsgaseinlässe in einem oberen Teil eines geneigten Bodens des Rückführkanals angeordnet sind,
- die Trägergaseinlässe in einem unteren Teil des geneigten Bodens angeordnet sind, und
- eine Trennwand auf dem geneigten Boden zwischen seinem oberen und unteren Teil angeordnet ist, und
daß der Schritt zur Einführung von Trägergas solcherart durchgeführt wird, daß ein Sperrbett aus Feststoffpartikeln auf dem unteren Teil des geneigten Bodens zustande gebracht wird, um eine Störung der Beförderung von Feststoffpartikeln durch den zumindest einen Feststoffpartikeleinlaß durch Fluidisierungsgas zu verhindern.

7. Verfahren nach Anspruch 1, gekennzeichnet durch Regelung des Wärmeübergangs in der Wärmeübertragungszone durch Regelung des Fluidisierungsgases, das in die Wärmeübertragungszone eingeführt wird.

8. Verfahren nach Anspruch 1, gekennzeichnet durch Beförderung von Feststoffpartikeln vom Rückführkanal in die Brennkammer mittels Überlaufs durch einen Überlaufeinlaß, der über der Förderzone angeordnet ist.

9. Verfahren nach Anspruch 9, gekennzeichnet durch Regelung des Wärmeübergangs in der Wärmeübertragungszone durch Regelung der Feststoffpartikelmenge, die mit Trägergas durch den zumindest einen Feststoffpartikeleinlaß befördert wird.

10. Verfahren nach Anspruch 1, gekennzeichnet durch Beförderung von Feststoffpartikeln mit Trägergas durch mehrere horizontale schmale schlitzähnliche Öffnungen mit einer Höhe (h) zu Länge (1) Verhältnis (h/l) < 0,5 in die Brennkammer.

11. Verfahren nach Anspruch 2, dadurch gekennzeichnet, daß das Sperrbett hauptsächlich durch den nichtfluidisierten Teil der Feststoffpartikel im Feststoffpartikelbett gebildet wird.

12. Verfahren nach Anspruch 1, dadurch gekennzeichnet, daß die Wirbelschicht aus Feststoffpartikeln, die eine Gassperre zwischen Partikelabscheider und Brennkammer vorsieht, im unteren Teil des Rückführkanals zustande gebracht wird.

13. Verfahren nach Anspruch 1, dadurch gekennzeichnet, daß der Schritt zur Einführung von Fluidisierungsgas zur Einführung des Gases mit einer Geschwindigkeit von knapp über 0 bis 1 m/s durchgeführt wird.

14. Zirkulierendes Wirbelschichtreaktorsystem, umfassend:
- eine Brennkammer (12) mit einer schnellen Wirbelschicht aus Partikeln darin und einer Abzugsöffnung (18) in ihrem oberen Teil,
- einen Partikelabscheider (14), der mit der Abzugsöffnung (18) im oberen Teil der Brennkammer (12) verbunden ist,
- einen Gasauslaß (20) im Partikelabscheider (14),
- einen oder mehrere Rückführkanäle (16), dessen/deren oberer Teil (26) mit dem Partikelabscheider (14) verbunden ist und unterer Teil mit der Brennkammer (12) verbunden ist,
- zumindest einen Rückführkanal (16) mit Mitteln fürs Auffangen von Feststoffpartikeln, die aus einer Partikelsuspension abgeschieden sind, die in der Brennkammer (12) aufwärts fließt,
- ein Bett (28) aus Feststoffpartikeln im Rückführkanal (16) mit einer Wärmeübertragungszone und einer Partikelförderzone innerhalb des Betts (28),
- Wärmeübertragungsflächen (30) in der Wärmeübertragungszone des Betts (28) zur Rückgewinnung von Wärme aus dem Feststoffpartikelbett (28),
- Fluidisierungsgaseinlässe (46) zur Einführung von Fluidisierungsgas in die Wärmeübertragungszone des Feststoffpartikelbetts (28) zur Regelung des Wärmeübergangs,
- zumindest einen Feststoffpartikeleinlaß (32), der unter dem Oberflächenniveau des Feststoffpartikelbetts (28) angeordnet ist, zur Verbindung des Feststoffpartikelbetts (28) im Rückführkanal (16) mit der Brennkammer (12), und
- Trägergaseinlässe (48) zur Einführung von Trägergas in die Partikelförderzone des Feststoffpartikelbetts (28) zur Beförderung von Feststoffpartikeln durch den zumindest einen Feststoffpartikeleinlaß (32) in die Brennkammer (12),
dadurch gekennzeichnet, daß
- das untere Niveau (40, 46a, 56) der Wärmeübertragungszone auf höherem Niveau als der untere Teil (42, 48a, 58) der Partikelförderzone liegt.

15. Zirkulierendes Wirbelschichtreaktorsystem nach Anspruch 14, dadurch gekennzeichnet, daß der Rückführkanal (16) einen gestuften Boden mit zumindest einem oberen Bodenabschnitt (40) und einem unterem Bodenabschnitt (42) hat, wobei die Wärmeübertragungszone auf dem oberen Bodenabschnitt (40) und die Partikelförderzone auf dem unteren Bodenabschnitt (42) ausgebildet ist.

16. Zirkulierendes Wirbelschichtreaktorsystem nach Anspruch 14, dadurch gekennzeichnet, daß ein Sperrbett aus Feststoffpartikeln im Feststoffpartikelbett (28) zwischen Fluidisierungsgaseinlässen (46) und Trägergaseinlässen (48) ausgebildet wird, um eine Störung des Wärmeübergangs in der Wärmeübertragungszone durch Trägergas zu verhindern, eine Störung der Beförderung von Partikeln durch den Feststoffpartikeleinlaß (32) in die Brennkammer (12) durch Fluidisierungsgas zu verhindern, oder beides.

17. Zirkulierendes Wirbelschichtreaktorsystem nach Anspruch 14, dadurch gekennzeichnet, daß ein Sperrbett aus Feststoffpartikeln, das hauptsächlich nichtfluidisierte Feststoffpartikel enthält, in der Förderzone gebildet wird.

18. Zirkulierendes Wirbelschichtreaktorsystem nach Anspruch 14, gekennzeichnet durch einen geneigten Boden (56, 58) und eine Trennwand (54), die den Boden in einen oberen (56) und einen unteren (58) Abschnitt aufteilt, wobei die Wärmeübertragungszone über dem oberen Bodenabschnitt (56) und die Partikelförderzone über dem unteren Bodenabschnitt (58) angeordnet ist.

19. Zirkulierendes Wirbelschichtreaktorsystem nach Anspruch 14, dadurch gekennzeichnet, daß es Mittel umfaßt zur Regelung der Einführung von Fluidisierungsgas zur Regelung des Wärmeübergangs in der Wärmeübertragungszone.

20. Zirkulierendes Wirbelschichtreaktorsystem nach Anspruch 14, dadurch gekennzeichnet, daß es zumindest einen Überlaufeinlaß (60) über der Wärmeübertragungszone zur Einführung von Partikeln via Überlauf in die Brennkammer (12) und Mittel zur Regelung der Einführung von Trägergas in die Partikelförderzone zur Regelung des Wärmeübergangs umfaßt.

21. Zirkulierendes Wirbelschichtreaktorsystem nach Anspruch 14, dadurch gekennzeichnet, daß der zumindest eine Feststoffpartikeleinlaß (32) eine schmale schlitzartige Öffnung (34) mit einem Höhe (h) zu Länge (1) Verhältnis (h/l) < 0,5 aufweist.

22. Zirkulierendes Wirbelschichtreaktorsystem nach Anspruch 14, dadurch gekennzeichnet, daß es eine gemeinsame Wand (22, 22', 22") zwischen Rückführkanal (16) und Brennkammer (12) umfaßt und daß der zumindest eine Feststoffpartikeleinlaß (32) eine ungefähr der Dicke der gemeinsamen Wand (22, 22', 22") entsprechende Länge aufweist.

23. Zirkulierendes Wirbelschichtreaktorsystem nach Anspruch 22, gekennzeichnet durch eine Doppelwand (22', 22") zwischen Partikelabscheider (14) und Brennkammer (12).

## Revendications

1. Procédé pour faire fonctionner un système à lit fluidisé circulant, utilisant une chambre de combustion, y présentant un lit fluidisé de particules solides, un séparateur de particules raccordé à un orifice d'évacuation dans la partie supérieure de la chambre de combustion, une ou plusieurs conduites de retour reliées avec leur parties supérieures au séparateur de particules et avec leur parties inférieures à la chambre de combustion par l'intermédiaire d'au moins une admission de particules solides, et une sortie de gaz dans le séparateur de particules, procédé comprenant les étapes consistant à:
- établir un lit fluidisé rapid de particules solides dans la chambre de combustion de façon à ce qu'une suspension de particules, comprenant des fumées et des particules solides y entraînées, soit amenée à s'écouler vers le haut dans la chambre de combustion,
- recueillir des particules solides séparées à partir de la suspension de gaz et de particules,
- diriger des particules solides recueillies et/ou des particules solides issues de la chambre de combustion vers une conduite de retour,
- établir un lit de particules solides dans la partie inférieure de ladite conduite de retour, le lit présentant une section de transfert de chaleur, une section de transport de particules, et une surface de sommet, dans laquelle le niveau fond de la section de transfert de chaleur existe à un niveau plus élevé que le fond de la section de transport de particules,
- récupérer de la chaleur du lit de particules solides dans la section de transfert de chaleur du lit avec des surfaces de transfert de chaleur y disposées,
- commander un transfert de chaleur dans la section de transfert de chaleur du lit de particules solides en introduisant du gaz de fluidisation dans le lit de particules solides dans la section de transfert de chaleur via des admissions de gaz de fluidisation,
- commander le transport de solides en introduisant du gaz transporteur séparément du gaz de fluidisation dans le lit de particules solides dans la section de transport de particules via des admissions de gaz transporteur, et
- transporter des particules solides à partir du lit avec le gaz transporteur au travers d'au moins une admission de particules solides vers la chambre de combustion, l'admission de particules solides étant disposée à un niveau au-dessous du niveau superficiel du lit de particules solides.

2. Procédé selon la revendication 1, caractérisé par le fait que l'on empêche qu'un gaz transporteur ne perturbe le transfert de chaleur dans la section de transfert de chaleur, et que l'on empêche qu'un gaz de fluidisation ne perturbe le transport de particules via une admission de particules solides vers la chambre de combustion, ou les deux, en disposant un lit barrage de particules solides dans le lit de particules solides entre les admissions de gaz de fluidisation et les admissions de gaz transporteur.

3. Procédé selon la revendication 1, caractérisé par le fait que l'on empêche qu'un gaz transporteur ne perturbe le transfert de chaleur dans la section de transfert de chaleur, en prévoyant un lit barrage de particules solides dans le lit de particules solides entre les admissions de gaz transporteur et la section de transfert de chaleur.

4. Procédé selon la revendication 1, caractérisé par le fait que l'on empêche qu'un gaz de fluidisation ne perturbe l'évacuation de particules solides par l'intermédiaire de l'admission de particules solides, en disposant un lit barrage en particules solides dans le lit de particules solides entre les admissions de gaz de fluidisation et l'admission de particules solides.

5. Procédé selon la revendication 1, caractérisé en ce que
- les admissions de gaz de fluidisation sont disposées sur une partie supérieure d'un fond incliné de la conduite de retour,
- les admissions de gaz transporteur sont disposées sur une partie inférieure du fond incliné, et
- une cloison est disposée sur le fond incliné entre ses parties supérieure et inférieure,
et en ce que l'étape consistant à introduire du gaz transporteur est mise en pratique de manière qu'un lit barrage en particules solides soit maintenu sur la partie inférieure du fond incliné, empêchant qu'un gaz transporteur ne perturbe le transfert de chaleur.

6. Procédé selon la revendication 1, caractérisé en ce que
- les admissions de gaz de fluidisation sont disposées sur une partie supérieure d'un fond incliné de la conduite de retour,
- les admissions de gaz transporteur sont disposées sur une partie inférieure du fond incliné, et
- une cloison est disposée sur le fond incliné entre ses parties supérieure et inférieure,
et en ce que l'étape consistant à introduire un gaz transporteur est mise en oeuvre de façon à ce qu'un lit barrage en particules solides soit maintenu sur la partie inférieure du fond incliné afin d'empêcher que le gaz de fluidisation ne perturbe le transport de particules solides par l'intermédiaire de la au moins une admission de particules solides.

7. Procédé selon la revendication 1, caractérisé par le fait que l'on commande le transfert de chaleur dans la section de transfert de chaleur en maîtrisant le gaz de fluidisation étant introduit dans la section de transfert de chaleur.

8. Procédé selon la revendication 1, caractérisé par le fait que l'on transporte des particules solides depuis la conduite de retour jusqu'à la chambre de combustion par débordement via un déversoir disposé au-dessus de la section de transport.

9. Procédé selon la revendication 9, caractérisé par le fait que l'on commande un transfert de chaleur dans une section de transfert de chaleur en maîtrisant la quantité de particules solides étant transportées avec un gaz transporteur à travers la au moins une admission de particules solides.

10. Procédé selon la revendication 1, caractérisé par le fait que l'on transporte des particules solides par l'intermédiaire de plusieurs orifices horizontaux étroits du type fente, présentant un rapport (h/l) de la hauteur (h) à la longueur (1) de moins de 0.5, avec un gaz transporteur vers la chambre de combustion.

11. Procédé selon la revendication 2, caractérisé en ce que le lit barrage est réalisé en une portion essentiellement non-fluidisée de particules solides dans le lit de particules solides.

12. Procédé selon la revendication 1, caractérisé par le lit fluidisé de particules solides, apportant une écluse à gaz entre le séparateur de particules et la chambre de combustion, étant établi dans la partie inférieure de la conduite de retour.

13. Procédé selon la revendication 1, caractérisé par l'étape consistant à introduire le gaz de fluidisation étant mise en pratique de façon à introduire ledit gaz à une vitesse entre juste au-dessus de 0 et 1 m/s.

14. Système de réacteur à lit fluidisé circulant présentant:
- une chambre de combustion (12), ayant un lit fluidisé rapid de particules dans celle-ci et un orifice d'évacuation (18) dans sa partie supérieure,
- un séparateur de particules (14) raccordé à l'orifice d'évacuation (18) dans la partie supérieure de la chambre de combustion (12),
- une sortie de gaz (20) dans le séparateur de particules (14),
- une ou plusieurs conduites de retour (16) présentant une partie supérieure (26) reliée au séparateur de particules (14) et une partie inférieure connectée à la chambre de combustion (12),
- au moins une conduite de retour (16) présentant un moyen pour recueillir des particules solides séparées à partir de la suspension de particules s'écoulant vers le haut dans la chambre de combustion (12),
- un lit (28) de particules solides dans la conduite de retour (16) présentant une section de transfert de chaleur et une section de transport de particules à l'intérieur dudit lit (28),
- des surfaces de transfert de chaleur (30) dans la section de transfert de chaleur du lit (28) afin de récupérer de la chaleur à partir du lit (28) de particules solides,
- des admissions de gaz de fluidisation (46) afin d'introduire du gaz de fluidisation dans la section de transfert de chaleur du lit (28) de particules solides pour commander le transfert de chaleur,
- au moins une admission de particules solides (32) disposée en dessous du niveau superficiel du lit (28) de particules solides, afin de relier le lit (28) de solides dans la conduite de retour (16) à la chambre de combustion (12), et
- des admissions de gaz transporteur (48) pour introduire du gaz transporteur dans la section de transport de particules du lit (28) de particules solides, afin de transporter des particules solides à travers la au moins une admission de particules solides (32) vers la chambre de combustion (12), caractérisé en ce que
- le niveau fond (40, 46a, 56) de la section de transfert de chaleur existe à un niveau plus élevé que le fond (42, 48a, 58) de la section de transport de particules.

15. Système de réacteur à lit fluidisé circulant selon la revendication 14, caractérisé en ce que la conduite de retour (16) présente un fond étagé avec au moins une partie fond supérieure (40) et une partie fond inférieure (42), la section de transfert de chaleur étant constituée sur la partie fond supérieure (40) et la section de transport de particules sur la partie fond inférieure (42).

16. Système de réacteur à lit fluidisé circulant selon la revendiction 14, carctérisé en ce que un lit barrage de particules solides est constitué dans le lit (28) de particules solides entre les admissions du gaz de fluidisation (46) et les admissions du gas transporteur (48), afin d'empêcher qu'un gaz transporteur ne perturbe le transfert de chaleur dans la section de transfert de chaleur, afin d'empêcher qu'un gaz de fluidisation ne perturbe le transport de particules via une admission de particules solides (32) vers la chambre de combustion, ou les deux.

17. Système de réacteur à lit fluidisé circulant selon la revendication 14, caractérisé en ce que un lit barrage de particules solides contenant essentiellement des particules solides non-fluidisées est constitué dans la section de transport.

18. Système de réacteur à lit fluidisé circulant selon la revendication 14, caractérisé par un fond incliné (56, 58) et une cloison (54) divisant le fond en une partie supérieure (56) et inférieure (58), la section de transfert de chaleur disposée au-dessus de la partie fond supérieure (56) et la section de transport de particules étant disposée au-dessus de la partie fond inférieure (58).

19. Système de réacteur à lit fluidisé circulant selon la revendication 14, caractérisé par le fait que l'on inclut un moyen pour maîtriser l'introduction du gaz de fluidisation afin de commander un transfert de chaleur dans la section de transfert de chaleur.

20. Système de réacteur à lit fluidisé circulant selon la revendication 14, caractérisé par le fait que l'on inclut au moins un déversoir (60) au-dessus de la section de transfert de chaleur afin d'introduire des particules par débordement dans la chambre de combustion (12), et un moyen pour maîtriser l'introduction du gaz transporteur vers la section de transport de particules pour commander un transfert de chaleur.

21. Système de réacteur à lit fludisé circulant selon la revendication 14, caractérisé en ce que ladite au moins une admission de particules solides (32) inclut un orifice étroit du type fente (34) dont le rapport (h/l) de la hauteur (h) à la longueur (1) est < 0.5.

22. Système de réacteur à lit fluidisé circulant selon la revendication 14, caractérisé par le fait que l'on inclut une paroi commune (22, 22', 22") entre la conduite de retour (16) et la chambre de combustion (12) et ladite au moins une admission de particules solides (32) présentant une longueur d'approximativement la largeur de la paroi commune (22, 22', 22").

23. Système de réacteur à lit fluidisé circulant selon la revendication 22, caractérisé par une paroi double (22', 22") entre le séparateur de particules (14) et la chambre de combustion (12).
